# FASCICULE DE BREVET EUROPEEN

(11) **EP 1 314 628 B1**
(45) Date de publication et mention de la délivrance du brevet: **22.08.2007**
(21) Numéro de dépôt: 02025478.5
(22) Date de dépôt: 15.11.2002
(51) Int. Cl.: B62D 5/04, F16H 25/20, H02K 7/06

(54) **Direction électrique pour véhicule, à redondance triple**
Elektrische Lenkung für ein Fahrzeug mit dreifacher Redundanz
Electric steering for a vehicle with triple redundance

(30) Priorité: 23.11.2001 FR 0115221
(43) Date de publication de la demande: 28.05.2003
(73) Titulaire: Michelin Recherche et Technique S.A., 1763 Granges-Paccot (CH)
(72) Inventeur: Laurent, Daniel, 1723 Marly (CH); Charaudeau, Jean-Jacques, 1741 Cottens (CH); Varenne, Pierre, 1740 Neyruz (CH)
(74) Mandataire: Bauvir, Jacques

(56) Documents cités:
- EP-A- 1 122 150
- EP-A- 1 219 525
- WO-A-01/23242
- DE-A- 19 941 474
- DE-U- 29 915 559
- PATENT ABSTRACTS OF JAPAN vol. 1998, no. 14, 31 décembre 1998 (1998-12-31) -& JP 10 258757 A (TOYOTA MOTOR CORP;KOYO SEIKO CO LTD), 29 septembre 1998 (1998-09-29)

## Description

La présente invention concerne la direction des véhicules automobiles routiers. Plus particulièrement, elle se rapporte à un système de direction électrique sans liaison mécanique entre les roues directrices et le volant, appelé plus simplement ci-dessous « direction électrique ». Ce type de direction est très communément désigné par « steer by wire ».

A la commande mécanique traditionnelle, assistée ou non, existant entre le volant et les roues directrices, on substitue dans une direction électrique la chaîne suivante. Au niveau des roues, il existe un actionneur électrique, de préférence individuel roue par roue, dont le rôle est d'imposer à la roue ou aux roues considérées l'angle de braquage convenable. La commande de direction à la disposition du conducteur du véhicule peut être un volant traditionnel ou une manette du genre manche à balai (joystick) ou tout autre dispositif convenable. Les ordres imprimés par le conducteur du véhicule sur son dispositif de commande sont envoyés aux actionneurs par une liaison électrique, l'ensemble étant placé sous le contrôle d'un calculateur chargé de programmes adéquats afin de pouvoir piloter le ou les actionneurs de façon appropriée.

Un des avantages de cette technologie est qu'elle se marie de façon idéale avec l'électronique, dont les progrès permettent des asservissements de plus en plus sophistiqués, ce qui fait qu'il est possible de placer le braquage des roues non seulement sous le contrôle de la commande manuelle mais aussi sous le contrôle d'un système de sécurité. Ainsi par exemple, on peut imprimer aux roues directrices un angle qui tient non seulement compte de la commande du conducteur du véhicule, mais qui tient également compte des paramètres dynamiques observés sur le véhicule.

Grâce à la direction électrique, il s'ouvre donc un champ beaucoup plus large pour agir sur la stabilité de trajectoire d'un véhicule. Par exemple, alors qu'à l'heure actuelle un système automatique de correction de la trajectoire du véhicule imprime des moments de lacets correctifs au moyen des freins d'une seule roue, le passage à des commandes électriques des différentes fonctions sur un véhicule permettrait d'agir sur l'angle de braquage des différentes roues directrices du véhicule pour en corriger la trajectoire.

Mais la direction d'un véhicule est une fonction essentielle et vitale pour la sécurité, comme les freins. Dès lors, pour pouvoir se substituer aux directions mécaniques, assistées ou non, quasi universellement adoptées à l'heure actuelle sur tous les véhicules routiers, il est essentiel qu'un système de direction électrique soit extrêmement sûr. C'est pourquoi on conçoit généralement des systèmes électriques redondants dans le but de, face à une panne, pouvoir éviter des conséquences critiques. Encore faut-il que la complexité plus grande des systèmes redondants n'aboutisse pas finalement à une probabilité de panne telle que la sécurité n'en serait pas augmentée.

La présente invention propose un système de direction à commande électrique simple, dont le fonctionnement est très sûr. Son architecture est redondante pour la totalité des organes électriques utilisés. Pour commander le braquage d'une roue directrice de véhicule, l'invention propose aussi un actionneur électrique particulier, bien adapté à ce système de direction électrique, dans lequel ledit actionneur comprend une extrémité de référence et une extrémité de commande déplacée par rapport à l'extrémité de référence par au moins trois moteurs électriques agissant en parallèle, chaque moteur électrique comportant sa propre connexion électrique indépendante de celle des autres moteurs électriques.

Le principe de redondance est basé sur un triplement de certains organes, à savoir les capteurs de position, les moteurs électriques, et les contrôleurs nécessaires, ainsi que les lignes électriques reliant les différents organes en cause. Cela permet de créer trois voies de commandes fonctionnant en parallèle. Plus précisément, les trois voies de commandes fonctionnent simultanément (bien qu'éventuellement de façon non identique en cas d'utilisation de logiciels différents) et aboutissent à des actions identiques tant qu'il n'y a aucune anomalie. Cette redondance, dite active, permet de repérer avec un degré de fiabilité élevé laquelle des trois voies est défaillante, et permet de continuer à fonctionner avec deux voies de commande dans des conditions à peine dégradées, au moins jusqu'à ce que le véhicule ait rejoint une zone dans laquelle le véhicule et surtout ses passagers sont en sécurité.

Le système de direction pour véhicules selon l'invention comprend :
- au moins une roue directrice pouvant être braquée ;
- des moyens de commande pour demander un changement de trajectoire, délivrant trois signaux électriques tous porteurs de la même information quant au changement de trajectoire demandé ;
- pour chacune des roues directrices, un actionneur électrique pour agir sur l'angle de braquage de la roue directrice, ledit actionneur électrique comprenant une extrémité de référence et une extrémité de commande déplacable par rapport à l'extrémité de référence, l'actionneur électrique étant relié à la roue directrice de façon appropriée, l'actionneur comportant trois moteurs électriques agissant en parallèle pour déplacer l'extrémité de commande par rapport à l'extrémité de référence ;
- pour chaque actionneur électrique, trois capteurs de position pour capter la position relative de l'extrémité de commande par rapport à l'extrémité de référence ;
- trois contrôleurs fonctionnant en parallèle, chacun faisant partie d'une voie électrique de commande dudit angle de braquage, le contrôleur de chaque voie électrique recevant l'un des trois signaux électriques, étant connecté à l'un des capteurs de position et pilotant l'un des moteurs électriques pour imposer ledit angle de braquage, les couples délivrés par chacun des moteurs s'additionnant en fonctionnement normal ;
- au moins un bus d'interconnexion des trois voies électriques de commande,
- des moyens de détection d'un écart dans l'état d'une voie électrique par rapport aux deux autres pour, en cas d'écart, passer en fonctionnement en mode dégradé.

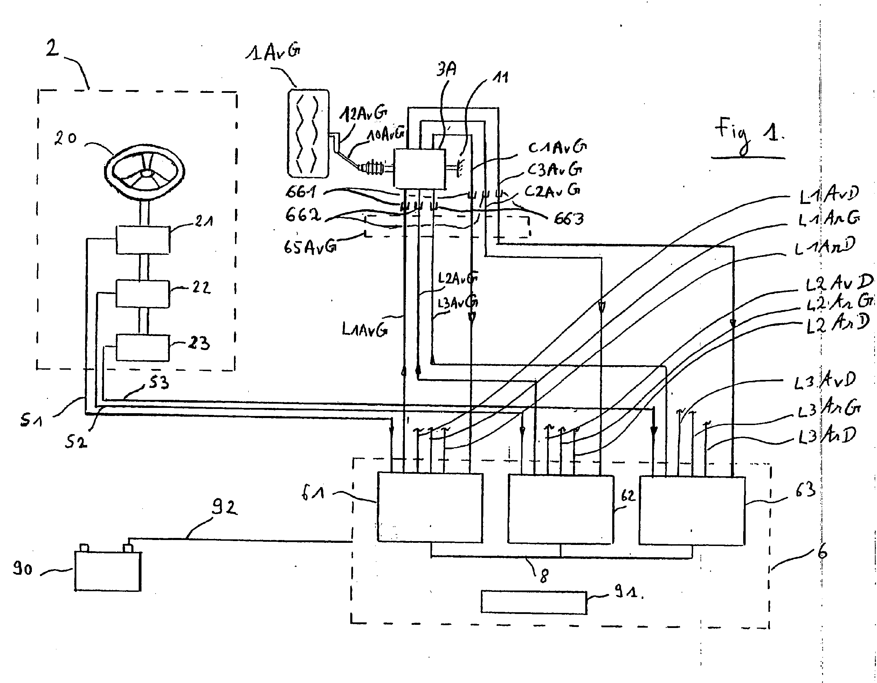

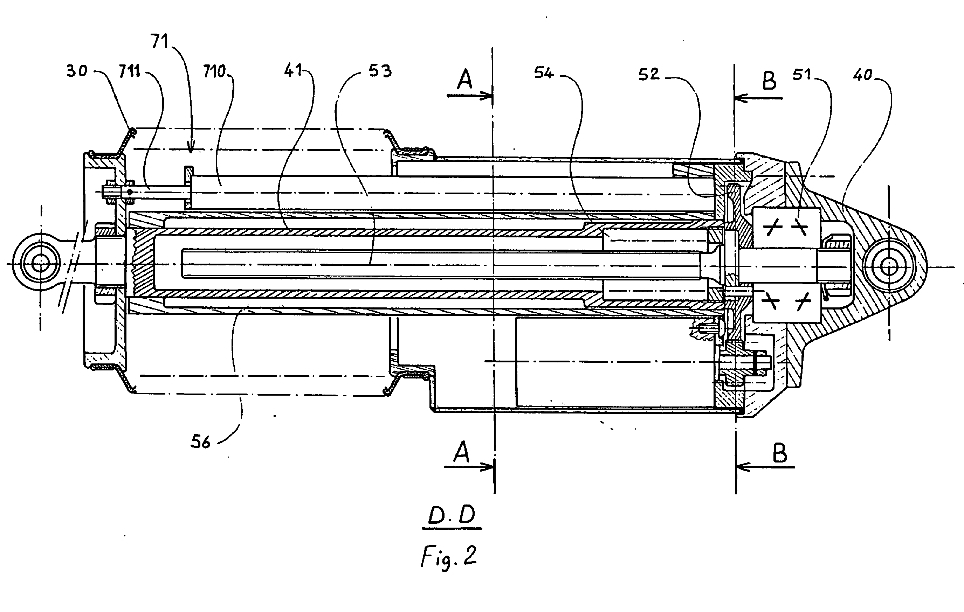

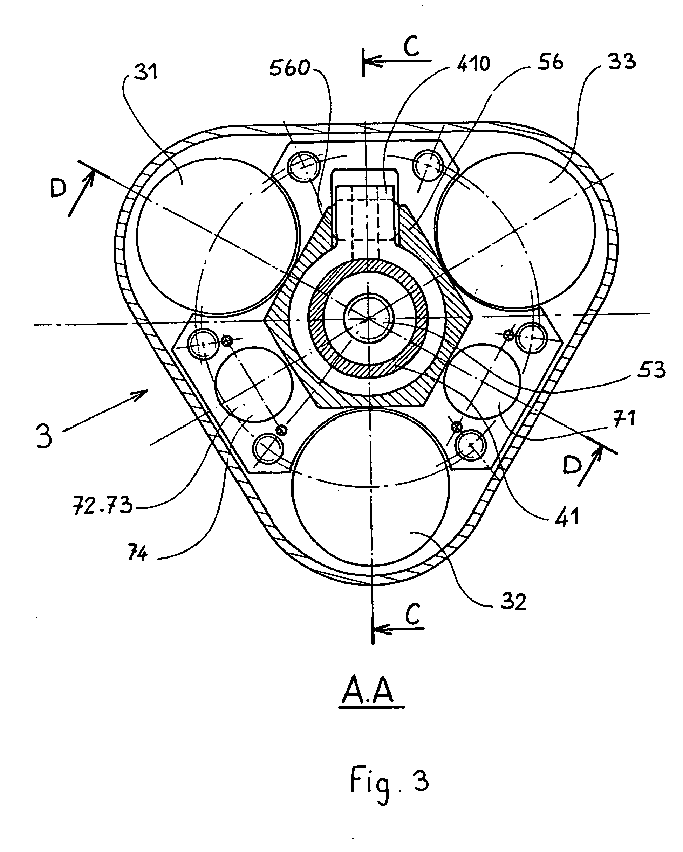

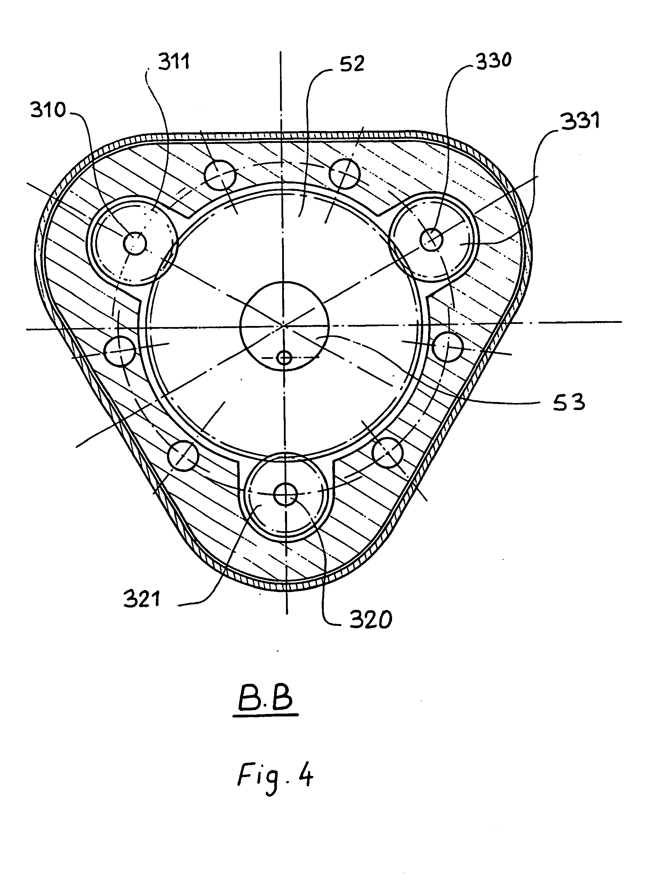

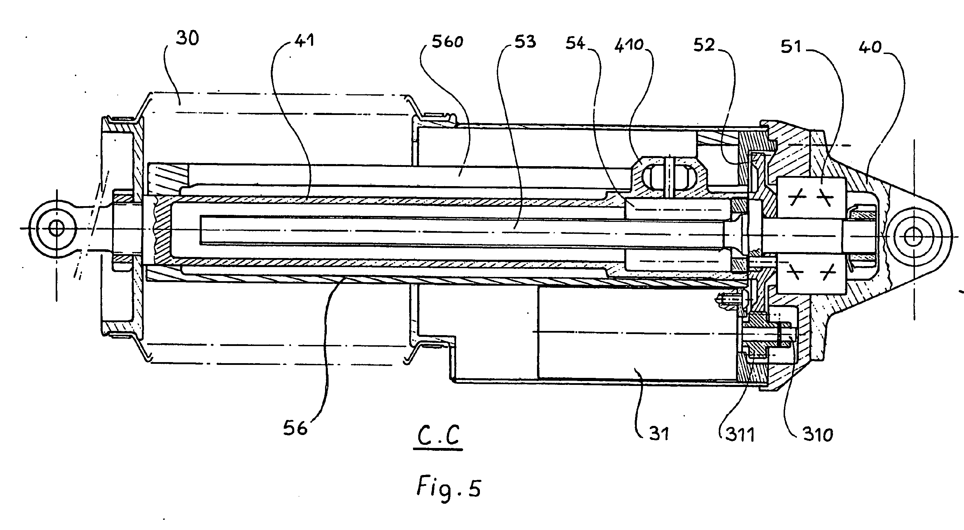

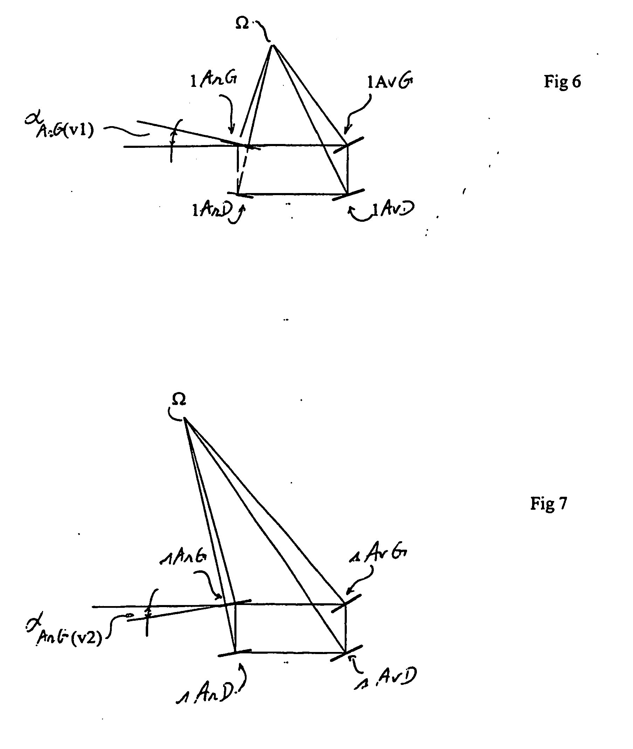

L'invention est illustrée au moyen des figures jointes, sur lesquelles :
■ la figure 1 est une représentation schématique du système de direction pour véhicules selon l'invention ;
■ la figure 2 est une coupe suivant DD à la figure 3, montrant un actionneur électrique selon l'invention ;
■ la figure 3 est une coupe selon AA à la figure 2 ;
■ la figure 4 est une coupe selon BB à la figure 2 ;
■ la figure 5 est une coupe selon CC à la figure 3 ;
■ la figure 6 est un schéma illustrant une application possible du système de direction selon l'invention à un véhicule de tourisme à quatre roues directrices ;
■ la figure 7 illustre le même véhicule à une vitesse de déplacement différente de la figure 6.

A la figure 1, on a représenté des moyens de commande 2 pour imposer un braquage du véhicule. La commande à la disposition du conducteur du véhicule peut, comme déjà dit, prendre n'importe quelle forme convenable. Ce peut être un volant de direction 20, mais cela pourrait être aussi tout autre levier de commande, comme un manche à balai, ou un levier tel que celui décrit dans la demande de brevet GB 2 314 910. Il n'y a pas de liaison mécanique entre le volant 20 et la ou les roues directrice(s). Trois capteurs 21, 22 et 23 mesurent l'angle au volant 20 imposé par le conducteur. Chacun des capteurs 21, 22, 23 fait partie d'une voie électrique différente et délivrent l'un desdits signaux électriques porteurs de l'information quant au changement de trajectoire demandé.

On voit une roue directrice 1A, et un actionneur électrique 3A relié d'une part à la caisse ou au châssis du véhicule 11 et d'autre part à une biellette 10AvG, elle-même reliée à un levier 12AvG faisant partie d'un porte-roue (non visible), pour commander l'angle de braquage de la roue 1AvG. L'actionneur électrique 3A spécialement conçu, qui pourrait avoir d'autres usages (par exemple, il pourrait être utilisé dans un autre système de direction électrique), comprend donc au moins trois moteurs électriques agissant en parallèle (pour les moteurs, voir les références 31, 32 et 33 et la description des figures 2 à 5 ci-dessous), chaque moteur électrique comportant sa propre connexion électrique 661 (respectivement 662, 663) indépendante de celle des autres moteurs électriques, destinée à relier le moteur à un contrôleur spécifique, différent du contrôleur pilotant les autres moteurs du même actionneur, comme cela apparaîtra ci-dessous.

Une unité centrale 6 permet de piloter le braquage de la ou des roues directrices. Le nombre de roues directrices est quelconque. On voit un faisceau électrique 65AvG reliant l'unité centrale 6 au groupe comprenant la roue directrice 1AvG et l'actionneur 3AvG. Pour ne pas surcharger le schéma, on n'a pas représenté les faisceaux reliant l'unité centrale 6 à d'autres groupes, eux aussi non représentés, comprenant une roue directrice et son actionneur. Il y a trois voies de commande. En pratique, pour encore diminuer la probabilité d'une panne, chaque actionneur 3 est relié électriquement à l'unité centrale 6 par trois faisceaux ou câbles complètement indépendants (un par voie de commande), dont les chemins sont aussi séparés que possible.

Par convention, lorsque l'on vise un organe de chaque groupe sans référence à sa localisation particulière, on utilise une référence numérique seule, et lorsque l'on vise un organe dans son application à une roue particulière, on utilise la même référence numérique suivie de lettres indiquant de quelle localisation il s'agit dans le véhicule. Dans la présente description ainsi que dans les dessins, les lettres AvG visent la localisation avant gauche, les lettres AvD la localisation avant droite, les lettres ArG la localisation arrière gauche et les lettres ArD la localisation arrière droite.

Pour un véhicule à roues directrices multiples, avantageusement, le système de direction selon l'invention est tel que chaque contrôleur pilote l'un des moteurs électriques de l'actionneur de chacune des roues directrices, chaque contrôleur permettant d'imposer sélectivement un angle de braquage approprié à chacune des roues directrices en fonction au moins de la localisation de ladite roue directrice sur le véhicule, de la vitesse du véhicule et du changement ou de la correction de trajectoire demandé.

On a vu que le nombre de roues directrices est quelconque. On peut par exemple commander deux roues directrices d'un essieu directeur unique. L'essieu directeur comporte deux groupes d'organes, chacun des groupes comprenant une roue directrice et un actionneur. En variante, l'essieu directeur peut comporter une liaison mécanique entre roues directrices, du genre crémaillère de direction, et le coulissement de celle-ci est contrôlé par un seul actionneur 3. Plus généralement, on peut implanter un nombre quelconque de tels groupes d'organes. On peut par exemple construire une voiture de tourisme à quatre roues, toutes directrices, et braquées chacune par son propre actionneur. C'est l'exemple choisi pour illustrer en détail la présente invention.

En se reportant maintenant aux figures 2 à 5, on voit que chaque actionneur 3 comporte un carter 40 utilisé comme référence mécanique, une tige 41 déplacée linéairement par rapport à l'extrémité de référence. Dans le mode de réalisation décrit, la tige 41 est mobile par rapport au carter 40. On voit trois moteurs électriques 31, 32 et 33 rotatifs assurant le mouvement de l'actionneur. Les trois moteurs électriques 31, 32 et 33 agissent en parallèle sur une vis 53 rotative. Le mouvement de rotation de la vis 53 est transformé en déplacement linéaire de la tige 41 comme on le verra plus en détails ci-dessous. Chacun des moteurs est dimensionné pour pouvoir transmettre à lui tout seul le couple nécessaire, pour des raisons de sécurité de fonctionnement. Cependant, pendant le fonctionnement en mode normal, le couple nécessaire se répartit entre chacun des trois moteurs électriques, ce qui est un gage de longévité par diminution des sollicitations et de l'échauffement de chaque moteur électrique. Cela contribue à la fiabilité de l'actionneur électrique.

On transforme le mouvement rotatif des moteurs électriques en mouvement linéaire par un système vis/écrou. Chacun des arbres de sortie 310, 320 et 330 des moteurs électriques 31, 32 et 33 comporte un pignon 311, 321 et 331 engrené sur une roue dentée 52. Un fourreau 56 entoure la tige 41. L'extrémité du fourreau 56 forme un palier guidant 1e coulissement de la tige 41. La roue dentée 52 est clavetée sur un arbre. L'arbre comporte d'un côté une vis 53. L'arbre est monté sur un roulement 51 d'un côté, et sur un palier intégré à la tige 41 de l'autre côté. La cage extérieure du roulement 51 est solidaire du carter 40 de l'actionneur électrique. Un écrou 54 est en prise avec la vis 53. Le fourreau 56 est solidaire du carter 40. Un soufflet de protection 30 est monté d'un côté sur le carter 40 du moteur et de l'autre sur la tige 41.

A la figure 4, on voit que chacun des pignons 311, 321 et 331 est monté en étoile autour de la roue dentée 52, avec un décalage constant de 120° les uns par rapport aux autres. Ceci n'est bien entendu qu'une disposition constructive non limitative. On pourrait aussi, notamment, monter trois moteurs côte à côte et de façon concentrique à la tige, avec entraînement de la tige par vis/écrou.

Aux figures 3 et 5, on voit que la tige 41 comporte une protubérance 410 elle-même engagée dans une lumière 560 creusée dans le fourreau 56. De la sorte, la tige 41 est immobilisée en rotation autour de son axe. Ainsi, le mouvement de rotation de la vis 53 est transformé en déplacement linéaire par l'écrou 54 qui se déplace tout le long de la vis 53.

On voit aussi bien à la figure 2 qu'à la figure 3 des capteurs de position 71, 72 et 73 utilisés pour repérer le déplacement de l'extrémité de commande, c'est à dire de la tige 41, par rapport à l'extrémité de référence. Le corps 710 du capteur de position 71 est solidaire du fourreau 56, donc du carter 40 de l'actionneur 3. Un curseur 711 est solidaire de la tige 41, donc mobile avec celle-ci. Deux capteurs de position similaires au capteur de position 71, à savoir les capteurs de position 72 et 73, sont intégrés au même composant 74. Chacun des capteurs de position 71, 72, 73 fait partie d'une voie électrique différente.

L'unité centrale 6 comporte trois contrôleurs 61, 62 et 63 (voir figure 1) fonctionnant en parallèle et simultanément en mode de fonctionnement normal, et d'une façon qui apparaîtra dans la suite en mode de fonctionnement dégradé (c'est à dire lorsque survient une défaillance, ce que bien entendu le système peut signaler par exemple en activant une alerte de dysfonctionnement). Chacun des contrôleurs 61, 62 et 63 fait partie d'une voie électrique de commande de l'angle de braquage d'une roue directrice. Chaque roue directrice est commandée par trois voies électriques de commande. Lorsqu'il y a plusieurs roues directrices, chaque contrôleur 61 (ou respectivement 62 ou 63) pilote les angles de braquage de toutes les roues directrices. Chaque contrôleur 61 (ou respectivement 62 ou 63) acquiert l'information provenant d'un des capteurs d'angle au volant 21 (ou respectivement 22 ou 23), par la ligne électrique S1 (ou respectivement S2 ou S3). Par ailleurs, chaque contrôleur 61 (ou respectivement 62 ou 63) pilote un moteur 31 (ou respectivement 32 ou 33) de chaque actionneur électrique 3 pour chaque roue directrice par la ligne L1 (respectivement L2 ou L3) et reçoit une information sur la position de l'actionneur électrique 3 (c'est à dire en pratique une information sur le braquage de la roue) provenant d'un capteur de position 71 (ou respectivement 72 ou 73) pour chacune des roues directrices 1, par la ligne électrique C1 (ou respectivement C2 ou C3). En outre, chaque contrôleur 61 (ou respectivement 62 ou 63) acquiert pour chacune des roues directrices l'information provenant d'un capteur de courant du moteur électrique auquel il est associé dans chacun des actionneurs électriques.

En résumé, chaque contrôleur 61 (ou respectivement 62 ou 63) assure le pilotage de toutes les roues directrices et chacune des roues directrices est elle-même placée sous le contrôle de trois contrôleurs autonomes agissant en parallèle. De préférence, les contrôleurs eux-mêmes sont différents, par exemple de types différents et/ou de marques différentes, afin de parfaire la redondance. Toujours afin de parfaire la redondance, de préférence, les contrôleurs (qu'ils soient de mêmes marques/types ou de marques/types différentes), sont chargés de logiciels différents (séries d'instructions différentes, langages d'écriture différents, programmeurs différents) mêmes si ces logiciels, différents, ont tous la même finalité. Autrement dit, chacun de ces logiciels, ayant son écriture propre, permet cependant d'aboutir à des actions identiques sur les moteurs. Une telle redondance, de logiciels, limite les risques de survenance d'un dysfonctionnement (bug) dans une combinaison de paramètres non testée.

Les trois contrôleurs 61, 62 et 63 sont reliés par au moins un bus 8 et échangent en temps réel toutes les données utiles pour décrire l'état électrique et mécanique de chaque voie de commande. Le fonctionnement du système de direction électrique reste en mode normal tant que tous les paramètres semblables de chacune des voies de commande ont des valeurs identiques, aux tolérances près. Par exemple, tant que les capteurs d'angle au volant 21, 22 et 23 délivrent des signaux identiques (aux tolérances près) sur les lignes S1, S2 et S3, on peut conclure qu'ils fonctionnent tous les trois de façon correcte. Tant que les courants électriques sur chacune des lignes L1, L2 et L3 connectant les trois contrôleurs 61, respectivement 62 et 63, aux trois moteurs électriques 31, respectivement 32 et 33, de chaque actionneur 3 ont des valeurs identiques (aux tolérances près), on peut conclure que tous les moteurs électriques fonctionnent correctement. Tant que les capteurs de position 71, 72 et 73, délivrent des signaux identiques (aux tolérances près) sur les lignes électriques C1, C2 et C3, on peut conclure qu'ils fonctionnent tous les trois de façon correcte. En résumé, on conclut alors que les trois voies électriques de commande fonctionnent de façon correcte. Le fonctionnement est donc en mode normal.

On peut concevoir différentes possibilités pour fonctionner en mode dégradé. Sous un premier aspect, de par l'existence de trois voies de commande, on peut considérer que lorsque l'un des paramètres d'une voie comporte une valeur différente du même paramètre dans les deux autres voies électriques, c'est le paramètre de valeur différente qui fait partie d'une voie électrique défaillante. Dans ce cas, l'angle de braquage de chacune de la roue directrice pour laquelle une défaillance a été identifiée dans une voie de commande doit être piloté par les deux voies ayant le même état, c'est à dire ayant conservé des valeurs de paramètre toutes identiques, aux tolérances près. Concrètement, on met en roue libre le moteur électrique de la voie de commande dans laquelle une anomalie a été détectée. Pour les autres roues directrices éventuelles, rien n'est changé.

Notons que si les voies électriques étaient seulement doubles et non pas triples, en cas de divergence de valeurs, il n'est pas possible de savoir directement quelle est la voie électrique qui est en état de fonctionnement normal. Cependant, on peut dans ce cas procéder à des analyses de vraisemblance, par exemple en comparant les différents paramètres entre eux et en analysant l'historique de l'évolution de ces paramètres au cours du temps. C'est de cette façon qu'il faut gérer l'apparition d'un éventuel deuxième mode dégradé dans un système de direction électrique selon l'invention. Ce type d'analyse peut porter globalement sur tout le véhicule. On peut comparer les paramètres avec chacun des paramètres identiques des autres roues et déterminer de cette façon ce que doit être le mode de fonctionnement dégradé. On voit ainsi que, en cas d'anomalie supplémentaire alors que le système de direction électrique ne fonctionne qu'avec deux voies électriques, il est encore possible de faire fonctionner le système de direction électrique proposé par l'invention, selon un deuxième mode dégradé. Là encore, on met en roue libre le moteur électrique de la voie de commande dans laquelle une anomalie a été détectée.

En outre, il faut que le système de direction électrique puisse encore fonctionner en cas de défaillance de l'alimentation en énergie électrique. C'est pourquoi l'unité centrale 6 comporte une batterie de secours 91 qui prend automatiquement le relais de la batterie principale 90 du véhicule en cas de défaillance de celle-ci ou en cas de défaillance de la ligne d'alimentation 92 entre la batterie principale 90 et l'unité de pilotage 6, pour assurer une alimentation de secours du système de direction électrique en cas de défaillance de l'alimentation normale, tout en envoyant une alerte appropriée. En fonctionnement normal, la batterie auxiliaire est rechargée ou maintenue à son état de charge maximale en soutirant de l'énergie dans la batterie principale 90. La batterie de secours 91 est dimensionnée de façon à pouvoir stocker une quantité d'énergie suffisante pour permettre le fonctionnement de la direction du véhicule pendant un temps minimum de sécurité prédéterminé, celui-ci devant au moins permettre au véhicule de s'arrêter dans des conditions de sécurité satisfaisantes tout en quittant un endroit plus particulièrement dangereux. Chacun des contrôleurs 61, 62 et 63 comporte une alimentation de secours provenant de la batterie de secours avec des circuits individuels séparés et protégés.

Ce principe de système de direction électrique peut être mis en oeuvre quel que soit le type de commande de direction. La commande de direction (dispositif de commande de changement de trajectoire) peut être un volant ou un manche à balais ou tout autre dispositif convenable. En outre, ce système de direction électrique se marie très bien avec des systèmes de contrôle automatique de stabilité de la trajectoire du véhicule. Dans ce cas, l'angle de braquage imposé à chacune des roues directrices est déterminé non seulement par les moyens de commande sur lesquels le pilote du véhicule agit, mais en plus, tient compte de consignes de corrections provenant d'un système de contrôle de stabilité du véhicule, qui décide d'ajouter ou de retrancher un angle de braquage par rapport au souhait du pilote afin de maintenir la trajectoire du véhicule dans des conditions de sécurité.

Les figures 6 et 7 illustrent une application à un système à quatre roues directrices. Une direction électrique peut très facilement s'adapter à la vitesse de déplacement longitudinale du véhicule. En manoeuvre à très basse vitesse, pour favoriser la mobilité du véhicule, il est utile de faire braquer les roues arrière en sens inverse des roues avant comme le montre la figure 6. Le véhicule tourne à gauche, et l'on a noté en particulier l'angle de braquage de la roue arrière gauche α_{ArG(v1)} à la vitesse v1. A une vitesse beaucoup plus élevée, on sait que pour maintenir une bonne stabilité du véhicule, il est utile de faire braquer les roues arrière dans le même sens que les roues avant, mais d'un angle plus faible. C'est ce qui est illustré à la figure 7, où le véhicule tourne toujours à gauche, et l'on a noté en particulier l'angle de braquage de la roue arrière gauche α_{ArG(v2)} à la vitesse v2 (valeurs d'angle non représentatives d'une situation réelle).

De façon générale, la commande de l'angle de braquage sélectivement roue par roue peut, à partir de l'angle au volant imposé par le conducteur du véhicule et de la vitesse de déplacement longitudinal du véhicule, déterminer quel est le centre instantané de rotation idéal pour le véhicule. Ce centre instantané de rotation est identifié par le point Q aux figures 6 et 7. A partir du moment où ce centre instantané de rotation est choisi, en le reliant au centre de chacune des roues directrices, on peut calculer l'angle de braquage de chacune des roues de façon à ce que le plan de la roue se présente perpendiculairement à la ligne reliant le centre de la roue considérée au centre instantané de rotation du véhicule Q. A la dérive des pneus près, le véhicule tourne autour du centre instantané de rotation du véhicule Q. Le centre instantané de rotation du véhicule Q est en permanence calculée de façon dynamique, en fonction des conditions de conduite (vitesse du véhicule, vitesse de lacet, ...).

## Revendications

1. Système de direction pour véhicule, comprenant :
• au moins une roue directrice (1) pouvant être braquée ;
• des moyens de commande (2) pour demander un changement de trajectoire, délivrant trois signaux électriques tous porteurs de la même information quant au changement de trajectoire demandé ;
• pour chacune des roues directrices, un actionneur électrique (3) pour agir sur l'angle de braquage de la roue directrice, ledit actionneur électrique comprenant une extrémité de référence et une extrémité de commande déplacée par rapport à l'extrémité de référence, l'actionneur électrique étant relié à la roue directrice (1) de façon appropriée, l'actionneur (3) comportant trois moteurs électriques (31, 32, 33) agissant en parallèle pour déplacer l'extrémité de commande par rapport à l'extrémité de référence ;
• pour chaque actionneur électrique (3), trois capteurs (71, 72, 73) de position pour capter la position relative de l'extrémité de commande par rapport à l'extrémité de référence ;
• trois contrôleurs (61, 62, 63) fonctionnant en parallèle, chacun faisant partie d'une voie électrique de commande dudit angle de braquage, le contrôleur de chaque voie électrique recevant l'un des trois signaux électriques, étant connecté à l'un des capteurs de position et pilotant l'un des moteurs électriques pour imposer ledit angle de braquage, les couples délivrés par chacun des moteurs s'additionnant en fonctionnement normal ;
• au moins un bus d'interconnexion (8) des trois voies électriques de commande,
• des moyens de détection d'un écart dans l'état d'une voie électrique par rapport aux deux autres pour, en cas d'écart, passer en fonctionnement en mode dégradé.

2. Système de direction selon la revendication 1 dans lequel, en mode dégradé, on active une alerte de dysfonctionnement.

3. Système de direction selon la revendication 1 dans lequel, en mode dégradé, la commande de braquage est imposée par les deux voies électriques ayant le même état.

4. Système de direction selon la revendication 1 dans lequel les moyens de commande (2) comportent un dispositif de commande sur lequel agit le conducteur du véhicule, comportent trois capteurs (21, 22, 23) pour relever la position des moyens de commande (2), chacun des capteurs faisant partie d'une voie électrique et délivrant l'un desdits signaux électriques.

5. Système de direction selon la revendication 1, pour un véhicule comportant une batterie d'accumulateurs principale (90), dans lequel l'alimentation normale en énergie électrique provient de la batterie principale, et comportant une batterie de secours (91) chargée automatiquement par la batterie principale en fonctionnement normal, et assurant automatiquement une alimentation de secours du système de direction en cas de défaillance de l'alimentation normale, tout en envoyant une alerte.

6. Système de direction selon la revendication 1, pour un véhicule à roues directrices multiples, dans lequel chaque contrôleur pilote l'un des moteurs électriques de l'actionneur de chacune des roues directrices, chaque contrôleur permettant d'imposer sélectivement un angle de braquage approprié à chacune des roues directrices en fonction au moins de la localisation de ladite roue directrice sur le véhicule, de la vitesse du véhicule et du changement de trajectoire demandé.

7. Actionneur électrique (3) comprenant un carter (40) comportant une extrémité de référence (40A), l'actionneur comprenant une tige (41) déplaçable linéairement par rapport à l'extrémité de référence (40A), la tige étant prolongée par une extrémité de commande (41B) et étant déplacée par rapport à l'extrémité de référence par au moins trois moteurs électriques (31, 32, 33) agissant en parallèle, chaque moteur électrique étant inclus dans ledit carter (40) et comportant sa propre connexion électrique indépendante de celle des autres moteurs électriques.

8. Actionneur électrique selon la revendication 7, dans lequel les moteurs électriques sont rotatifs, le mouvement de rotation des moteurs électriques étant transformé en déplacement linéaire par un dispositif vis-écrou.

9. Actionneur électrique selon la revendication 7, comportant au moins trois capteurs de position mesurant le déplacement de l'extrémité de commande par rapport à l'extrémité de référence.

10. Système de direction selon l'une des revendications 1 à 6, comportant un actionneur électrique selon l'une des revendications 7 à 9.

11. Actionneur électrique selon la revendication 7, comportant un soufflet de protection (30) monté d'un côté sur le carter (40) du moteur et de l'autre sur la tige (41).

12. Actionneur électrique selon la revendication 8, comportant une roue dentée (52) montée sur un arbre, l'arbre comporte d'un côté une vis 53, l'arbre étant monté sur un roulement (51) d'un côté du carter (40) et sur un palier intégré à la tige (41) de l'autre côté du carter (40).

## Claims

1. Steering system for a vehicle, comprising:
• at least one steerable wheel (1) capable of being steered;
• operating means (2) for effecting a change of direction, which deliver three electrical signals that all carry the same information about the required change of direction;
• for each of the steerable wheels, an electrical actuator (3) for altering the steering angle of the steerable wheel, the said electrical actuator comprising a reference end and a control end which is displacable with respect to the reference end, the electrical actuator being suitably connected to the steerable wheel (1), the actuator (3) having three electric motors (31, 32, 33) which act in parallel in order to displace the control end with respect to the reference end;
• for each electrical actuator (3), three position sensors (71, 72, 73) for sensing the relative position of the control end with respect to the reference end;
• three controllers (61, 62, 63) which operate in parallel, each forming part of an electrical control channel for the said steering angle, the controller of each electrical channel receiving one of the three electrical signals, being connected to one of the position sensors and driving one of the electric motors in order to set the said steering angle, the torques delivered by each of the motors being added together in normal operation;
• at least one interconnection bus (8) for the three electrical control channels,
• means for detecting a discrepancy in the status of one electrical channel with respect to the other two, in order to change to operation in a downgraded mode in the event of a discrepancy.

2. Steering system according to Claim 1, in which a malfunction warning is activated in the downgraded mode.

3. Steering system according to Claim 1, in which, in the downgraded mode, the steering control is carried out by the two electrical channels which have the same status.

4. Steering system according to Claim 1, in which the operating means (2) have a operating device which the driver of the vehicle operates, and which has three sensors (21, 22, 23) for ascertaining the position of the operating means (2), each of the sensors forming part of an electrical channel and delivering one of the said electrical signals.

5. Steering system according to Claim 1, for a vehicle having a main battery of accumulators (90), in which the normal electrical power supply comes from the main battery, and having a back-up battery (91) which is automatically charged by the main battery in normal operation, and which automatically provides a back-up supply for the steering system in the event that the normal supply fails, while also sending a warning.

6. Steering system according to Claim 1, for a vehicle with multiple steerable wheels, in which each controller drives one of the electric motors of the actuator of each of the steerable wheels, each controller making it possible to selectively set a suitable steering angle for each of the steerable wheels, as a function of at least the location of the said steerable wheel on the vehicle, the speed of the vehicle and the required change of direction.

7. Electrical actuator (3) comprising a casing (40) comprising a reference end (40A), the electrical actuator comprising a rod (41) which is displaced lineally with respect to the reference end (40A), the rod being prolonged by a control end (41B) and being displaced with respect to the reference end by at least three electric motors (31, 32, 33) that act in parallel, each electric motor being included in said casing (40) and having its own electrical connection which is independent of that of the other electric motors.

8. Electrical actuator according to Claim 7, in which the electric motors are rotary motors and the rotational movement of the electric motors being converted into a linear displacement by a screw-nut device.

9. Electrical actuator according to Claim 7, having at least three position sensors which measure the displacement of the control end with respect to the reference end.

10. Steering system according to one of Claims 1 to 6, having an electrical actuator according to one of Claims 7 to 9.

11. Electrical actuator according to Claim 7, comprising a protective bellows (30) fitted onto the casing (40) of the motor on one side and onto the rod (41) on the other side.

12. Electrical actuator according to Claim 8, comprising a toothed wheel 52 mounted on a shaft, the shaft comprising a screw 53 on one side, the shaft being mounted on a rolling bearing (51) on one side of the casing (40) and on a bearing integrated with the rod (41) on the other side of the casing (40).

## Patentansprüche

1. Fahrzeug-Lenksystem, das aufweist:
• mindestens ein gelenktes Rad (1), das eingeschlagen werden kann;
• Steuermittel (2), um eine Spuränderung zu fordern, die drei elektrische Signale liefern, die alle die gleiche Information bezüglich der geforderten Spuränderung enthalten;
• für jedes der gelenkten Räder einen elektrischen Stellantrieb (3), um auf den Einschlagwinkel des gelenkten Rads einzuwirken, wobei der elektrische Stellantrieb ein Bezugsendstück und ein Steuerendstück aufweist, das bezüglich des Bezugsendstücks verschoben ist, wobei der elektrische Stellantrieb mit dem gelenkten Rad (1) in geeigneter Weise verbunden ist, wobei der Stellantrieb (3) drei Elektromotoren (31, 32, 33) aufweist, die parallel wirken, um das Steuerendstück bezüglich des Bezugsendstücks zu verschieben;
• für jeden elektrischen Stellantrieb (3) drei Lagesensoren (71, 72, 73), um die relative Position des Steuerendstücks bezüglich des Bezugsendstücks zu erfassen;
• drei parallel arbeitende Steuergeräte (61, 62, 63), die je Teil eines elektrischen Steuerpfads des Einschlagwinkels sind, wobei das Steuergerät jedes elektrischen Pfads, das eines der drei elektrischen Signale empfängt, mit einem der Lagesensoren verbunden ist und einen der Elektromotoren steuert, um den Einschlagwinkel aufzuzwingen, wobei die von jedem der Motoren gelieferten Momente sich im Normalbetrieb addieren;
• mindestens einen Verbindungsbus (8) der drei elektrischen Steuerpfade,
• Mittel zur Erfassung einer Abweichung des Zustands eines elektrischen Pfads bezüglich der beiden anderen, um im Fall einer Abweichung in den Notbetrieb überzugehen.

2. Lenksystem nach Anspruch 1, bei dem im Notbetrieb ein Fehlfunktionsalarm aktiviert wird.

3. Lenksystem nach Anspruch 1, bei dem im Notbetrieb die Lenkeinschlagsteuerung von den zwei elektrischen Pfaden aufgezwungen wird, die den gleichen Zustand haben.

4. Lenksystem nach Anspruch 1, bei dem die Steuermittel (2) eine Steuervorrichtung aufweisen, auf die der Fahrer des Fahrzeugs einwirkt, mit drei Sensoren (21, 22, 23), um die Position der Steuermittel (2) festzustellen, wobei jeder der Sensoren Teil eines elektrischen Pfads ist und eines der elektrischen Signale liefert.

5. Lenksystem nach Anspruch 1 für ein Fahrzeug, das eine Hauptakkumulatorenbatterie (90) aufweist, bei dem die normale Versorgung mit elektrischer Energie von der Hauptbatterie kommt, und das eine Notstrombatterie (91) aufweist, die im Normalbetrieb automatisch von der Hauptbatterie geladen wird und automatisch eine Notversorgung des Lenksystems gewährleistet, wenn die normale Versorgung ausfällt, und gleichzeitig einen Alarm aussendet.

6. Lenksystem nach Anspruch 1 für ein Fahrzeug mit mehreren gelenkten Rädern, bei dem jedes Steuergerät einen der Elektromotoren des Stellantriebs jedes der gelenkten Räder steuert, wobei jedes Steuergerät es ermöglicht, jedem der gelenkten Räder in Abhängigkeit mindestens von der Lokalisierung des gelenkten Rads am Fahrzeug, von der Geschwindigkeit des Fahrzeugs und von der geforderten Spuränderung selektiv einen geeigneten Einschlagwinkel aufzuzwingen.

7. Elektrischer Stellantrieb (3) mit einem Gehäuse (40), das ein Bezugsendstück (40A) aufweist, wobei der Stellantrieb eine Stange (41) aufweist, die linear bezüglich des Bezugsendstücks (40A) verschiebbar ist, wobei die Stange von einem Steuerendstück (41B) verlängert wird und bezüglich des Bezugsendstücks durch mindestens drei parallel wirkende Elektromotoren (31, 32, 33) verschoben wird, wobei jeder Elektromotor im Gehäuse (40) enthalten ist und seinen eigenen elektrischen Anschluss unabhängig von dem der anderen Elektromotoren aufweist.

8. Elektrischer Stellantrieb nach Anspruch 7, bei dem die Elektromotoren drehend sind, wobei die Drehbewegung der Elektromotoren von einer Schraube/Mutter-Vorrichtung in eine lineare Verschiebung umgewandelt wird.

9. Elektrischer Stellantrieb nach Anspruch 7, der mindestens drei Lagesensoren aufweist, die die Verschiebung des Steuerendstücks bezüglich des Bezugsendstücks messen.

10. Lenksystem nach einem der Ansprüche 1 bis 6, das einen elektrischen Stellantrieb nach einem der Ansprüche 7 bis 9 aufweist.

11. Elektrischer Stellantrieb nach Anspruch 7, der einen Schutzfaltenbalg (30) aufweist, der mit einer Seite auf das Gehäuse (40) des Motors und mit der anderen Seite auf die Stange (41) montiert ist.

12. Elektrischer Stellantrieb nach Anspruch 8, der ein auf eine Welle montiertes Zahnrad (52) aufweist, wobei die Welle auf einer Seite eine Schraube 53 aufweist, wobei die Welle auf ein Radlager (51) auf einer Seite des Gehäuses (40) und auf ein in die Stange (41) integriertes Lager auf der anderen Seite des Gehäuses (40) montiert ist.
